# EUROPÄISCHE PATENTSCHRIFT

(11) **EP 3 052 893 B1**
(45) Veröffentlichungstag und Bekanntmachung des Hinweises auf die Patenterteilung: **30.05.2018**
(21) Anmeldenummer: 14786621.4
(22) Anmeldetag: 26.09.2014
(51) Int. Cl.: G01C 21/36, G08G 1/0968, G01C 21/34

(54) **SYSTEM ZUR BEREITSTELLUNG VON DATEN FÜR FAHRZEUGE**
SYSTEM FOR THE PROVISION OF DATA TO VEHICLES
SYSTEME POUR LA PROVISION DE DONNEES POUR VEHICULES

(30) Priorität: 02.10.2013 DE 102013220023
(43) Veröffentlichungstag der Anmeldung: 10.08.2016
(73) Patentinhaber: Continental Automotive GmbH, 30165 Hannover (DE)
(72) Erfinder: ESSWEIN, Dieter, 93092 Barbing (DE); ERNSTBERGER, Berthold, 93073 Neutraubling (DE)
(86) Internationale Anmeldenummer: PCT/EP2014/070588
(87) Internationale Veröffentlichungsnummer: WO 2015/049167

(56) Entgegenhaltungen:
- EP-A1- 2 354 760
- WO-A2-2007/067841
- JP-A- 2012 221 302
- KR-A- 20090 065 987
- US-A1- 2011 130 894
- US-A1- 2012 271 544
- US-A1- 2013 054 132

## Beschreibung

Die Erfindung betrifft ein System zur Bereitstellung von Daten für Fahrzeuge, wobei die Daten von verschiedenen Servern, denen ein Gebietsbereich zugeordnet ist, bereitgestellt werden. Die Erfindung betrifft des Weiteren ein Verfahren zur Bereitstellung von Daten für Fahrzeuge.

Beim hochautomatisierten Fahren ist es notwendig, dass während einer Fahrt eines Fahrzeugs Informationsdaten, die dem Fahrzeug beispielsweise einen Hinweis auf einen Verkehrszustand, einen Straßenzustand oder einen Wetterzustand auf einer Fahrtstrecke geben, von einem Server an das Fahrzeug übertragen werden. Ein Gebiet, in dem hochautomatisiertes Fahren möglich ist, kann dazu beispielsweise in einzelne Gebietsbereiche unterteilt werden. Für jeden Gebietsbereich ist ein Gebietsbereichsserver bzw. Gebietsbereichssteuerrechner vorgesehen, der die Informationsdaten an Fahrzeuge in dem jeweiligen Gebietsbereich bereitstellen kann. Ein zentraler Gebietsserver bzw. Gebietssteuerrechner kann beispielsweise anhand einer Geoposition oder anhand weiterer statischer Attribute (Telefonnummer, Registrierungsschlüssel etc.) die einzelnen Fahrzeuge auf die dedizierten Gebietsbereichsserver aufteilen. Die Informationsdaten werden den einzelnen Fahrzeugen dann von dem ihnen zugewiesenen Gebietsbereichsserver mitgeteilt.

Wenn zur Übertragung von Daten zwischen den Fahrzeugen und den Servern das Mobilfunknetz verwendet wird, kann bei einem hohen Datenaufkommen das Mobilfunknetz stark belastet werden. Bei hohem Datenaufkommen ist daher eine effiziente Verteilung der Nachrichtenübermittlung zwischen den Servern und den Fahrzeugen notwendig.

In den Dokumenten KR 2009 0065987 A, US 2012/271544 A1, US 2013/054132 A1, JP 2012 221302 A und WO 2007/067841 A2 werden prognostizierte Wegdaten von Fahrzeugen an einen Server gesendet, um eine optimale Route oder relevante Information für jedes Fahrzeug zu ermitteln und zurückzusenden.

Die Dokumente US 2011/130894 A1 und EP 2 354 760 A1 offenbaren Führungssysteme, die einen Globalen Server, der eine Vielzahl von lokalen Servern über verschiedene Gebietsbereiche koordiniert, umfassen. In US 2011/130894 A1 ermittelt ein globaler Server drahtlose Kommunikationsressourcen so wie Frequenzbänder und Zeitintervalle für lokale Server in Abhängigkeit von erkannten Fahrzeugen. Die Aufgabe der vorliegenden Erfindung ist es, ein System zur Bereitstellung von Daten für Fahrzeuge anzugeben, bei dem die in einem Nachrichtennetz auftretende Last reduziert ist und die Bereitstellung der Daten für die Fahrzeuge möglichst effizient auf Gebietsbereichsservern eines Gebiets verteilt ist. Eine weitere Aufgabe der vorliegenden Erfindung ist es, ein Verfahren zur Bereitstellung von Daten für Fahrzeuge anzugeben, bei dem die infolge der Datenübertragung in einem Nachrichtennetz auftretende Last reduziert ist und die Bereitstellung der Daten möglichst effizient auf Gebietsbereichsserver eines Gebiets verteilt ist.

Ein System zur Bereitstellung von Daten für Fahrzeuge ist im Patentanspruch 1 angegeben. Ein Verfahren zur Bereitstellung von Daten für Fahrzeuge ist im Patentanspruch 10 angegeben. Das Verfahren ist insbesondere zur Ausführung durch ein erfindungsgemäßes System geeignet.

Das angegebene Systeme bzw. das angegebene Verfahren ermöglichen eine prognosegestützte Lastverteilung in dem Gebietsbereich des Gebietsbereichsservers zur Unterstützung eines hochautomatisierten Fahrens. Dabei werden die Informationsdaten, die von dem Gebietsbereichsserver erzeugt werden, von dem Gebietsbereichsserver nicht an sämtliche Fahrzeuge, die in dem Gebietsbereich des Gebietsbereichsservers registriert sind, gesendet. Stattdessen erfolgt eine Übertragung von dem Gebietsbereichsserver nur an diejenigen Fahrzeuge, deren prognostizierter Fahrweg in einem Teilbereich des Gebietsbereichs liegt, für den das Übertragen der Informationsdaten relevant ist. Dadurch lässt sich das Verkehrsaufkommen bei der Nachrichtenübertragung auf diejenigen Fahrzeuge reduzieren, die sich in einem bestimmten Straßenbereich eines größeren Gebietsbereichs befinden oder innerhalb der nächsten Zeit dort hinkommen werden. Durch Auswertung der prognostizierten Wegedaten der einzelnen Fahrzeuge kann der Gebietsbereichsserver das Datenverkehrsaufkommen zu den Fahrzeugen, die in seinem Gebietsbereich registriert sind, reduzieren.

Gemäß der Erfindung ist ein Gebietsserver zum Aufteilen eines Gebiets in mehrere Gebietsbereiche vorgesehen. Die in dem Gebiet befindlichen Fahrzeuge, die beispielsweise an einem hochautomatisierten Fahren teilnehmen, können ihre prognostizierten Wegedaten, die einen wahrscheinlichen Fahrweg angeben, an den Gebietsserver übertragen. Die jeweiligen Wegedaten können beispielsweise in einer jeweiligen Prognosedatenbank der Fahrzeuge gespeichert sein und an den Gebietsserver übertragen werden. Anhand der prognostizierten Wegedaten kann der Gebietsserver die Größe der Gebietsbereiche des Gebiets, für die die einzelnen Gebietsbereichsserver zuständig sind, dynamisch festlegen. Des Weiteren kann der Gebietsserver die einzelnen Fahrzeuge anhand ihrer prognostizierten Wegedaten auf die Gebietsbereichsserver verteilen und bei den Gebietsbereichsservern für eine Informationsdatenübertragung registrieren.

Die Auswertung von prognostizierten Wegedaten bzw. einer Prognosedatenbank der einzelnen Fahrzeuge verhindert eine Ausstrahlung von Informationsdaten durch einen Gebietsbereichsserver an sämtliche Fahrzeuge, die in seinem Gebietsbereich registriert sind. Da sich die prognostizierten Wegedaten bzw. die Prognosedatenbanken mehrerer Fahrzeuge überlappen werden, sofern die Fahrzeuge ähnliche Strecken befahren, und ein Gebietsbereichsserver für gewisse prognostizierte Wegedaten bzw. für einen gewissen Datenbankbereich der Prognosedatenbank zuständig ist, erfolgt automatisch eine dynamische Verteilung der Kommunikation zwischen den Gebietsbereichsservern und den Fahrzeugen. Diese Dynamisierung erlaubt es, auf Lastsituationen adäquat zu reagieren. Über den Gebietsserver können nach Bedarf die Gebietsbereiche, für die die jeweiligen Gebietsbereichsserver zuständig sind, verkleinert oder vergrößert werden, falls das Datenverkehrsaufkommen für einen der Gebietsbereichsserver zu groß bzw. zu gering wird.

Da jedes Fahrzeug nur Informationsdaten von einem Gebietsbereichsserver erhält, kann ein Lastausgleich bei der Datenübertragung einfach und effektiv realisiert werden. Es wird erwartet, dass bei erhöhtem Einsatz der Funktionalitäten des hochautomatisierten Fahrens, die Datenmengen an den Gebietsbereichsservern stark anwachsen. In Zukunft wird es daher nicht ausreichen, dass ein zentraler Gebietsserver alle Fahrzeuge, die an einem automatisierten Betrieb teilnehmen, verwaltet. Andererseits wird eine statische Aufteilung der Fahrzeuge, beispielsweise anhand ihrer Geoposition, einem wechselnden Verkehrsaufkommen nicht gerecht.

Die Verwendung von prognostizierten Wegedaten bzw. einer Prognosedatenbank, anhand derer ein zukünftiger Fahrweg eines Fahrzeugs ermittelt werden kann, erlaubt eine intelligente bedarfsgerechte Lastverteilung. Eine ausschließliche Verwendung einer programmierten Route schränkt die Qualität dagegen ein, da es immer wieder zu manuellen Eingriffen oder erzwungenen Routenänderungen kommen wird. Es ist außerdem eine unnötige Einschränkung als Vorbedingung für ein hochautomatisiertes Fahren. Eine Zuordnung von Fahrzeugen anhand ihrer prognostizierten Wegedaten ist somit ein Kompromiss zwischen der Aussendung von Informationsdaten an alle Fahrzeuge und der Aussendung von Informationsdaten an Fahrzeuge auf einer vordefinierten Route.

Eine Skalierbarkeit der Größe der einzelnen Gebietsbereiche, für die die Gebietsbereichsserver zuständig sind, wird von einer zentralen Instanz unter Verwendung der bereits vorhandenen Übergabealgorithmen zwischen den Gebietsbereichsservern ermöglicht. Solange der prognostizierte Fahrweg bzw. die Prognosedatenbank nicht zu klein gewählt ist, ist beim Wechsel zwischen Gebietsbereichsservern eine automatische Hysterese garantiert, durch die ein permanentes Hin- und Herwechseln zwischen den Gebietsbereichsservern verhindert wird. Der Kommunikationsflaschenhals wird die Verbindung zum Fahrzeug sein. Die prognostizierten Wegedaten bzw. die Prognosedatenbank erlaubt es zunächst, nur wahrscheinlich relevante Ereignisse an die Gebietsbereichsserver zu melden. Durch eine Verlagerung der Übergabe von Fahrzeugen zu benachbarten Gebietsbereichsservern innerhalb der zuständigen Gebietsbereichsserver, die eine hoch-bandbreitige Verbindung besitzen, wird das von einem Wechsel betroffene Fahrzeug kaum etwas bemerken, da sich sein dedizierter Gebietsbereichsserver erst bei vollständigem Verlassen des alten Zuständigkeitsbereichs ändern wird. Bei entsprechender Konfiguration der den Gebietsbereichsservern zugewiesenen Datenbankabschnitten kann die Last minimiert werden. Der neue zuständige Gebietsbereichsserver wird schon vor der Kommunikationsaufnahme mit einem Fahrzeug dessen aktuellen Datenbestand kennen. Während einer Übergangsphase, während der ein prognostizierter Fahrweg aus einem Zuständigkeitsbereich eines Gebietsbereichsservers heraus wandert, bleibt die Kommunikation zu dem bisher zuständigen Gebietsbereichsserver erhalten. Die Fahrzeugkommunikation ist somit in den Gebietsbereichsserver verlagert, solange das Fahrzeug nicht den Bereich eines dedizierten Gebietsbereichsservers verlassen hat.

Die Erfindung wird im Folgenden anhand von Figuren, die Ausführungsbeispiele der vorliegenden Erfindung zeigen, näher erläutert. Es zeigen:
- Figur 1: eine Ausführungsform eines Systems und eines Verfahrens zur Bereitstellung von Daten für Fahrzeuge,
- Figur 2: eine weitere Ausführungsform eines Systems und eines Verfahrens zur Bereitstellung von Daten für Fahrzeuge,
- Figur 3: eine weitere Ausführungsform eines Systems und eines Verfahrens zur Bereitstellung von Daten für Fahrzeuge,
- Figur 4: eine weitere Ausführungsform eines Systems und eines Verfahrens zur Bereitstellung von Daten für Fahrzeuge.

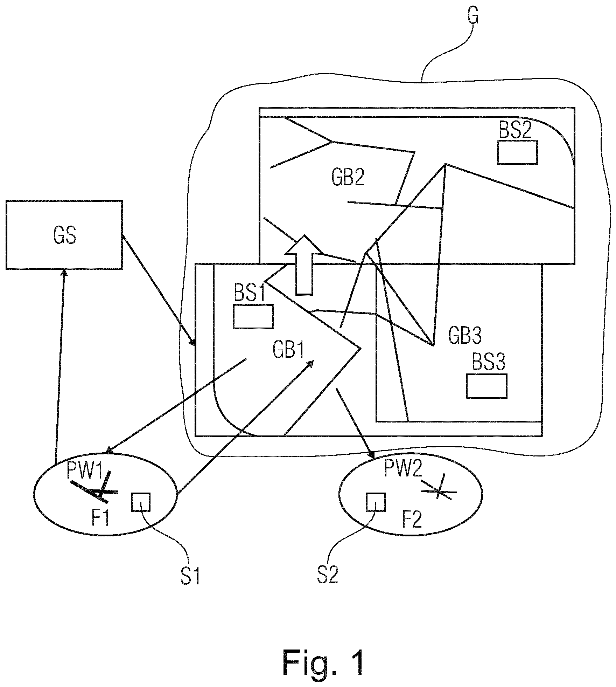

Figur 1 zeigt eine Ausführungsform eines Systems und eines Verfahrens zur Bereitstellung von Daten für Fahrzeuge F1 und F2. Ein Gebiet G, in dem sich die Fahrzeuge befinden können, ist in Gebietsbereiche GB1, GB2, GB3 eingeteilt. Jedem der Gebietsbereiche ist ein Gebietsbereichsserver BS1, BS2, BS3 zum Bereitstellen von Informationsdaten für Fahrzeuge in dem jeweiligen Gebietsbereich zugeordnet. Die von den Gebietsbereichsservern bereitgestellten Informationsdaten enthalten eine Information für das Steuern der Fahrzeuge.

Die Funktionsweise der Gebietsbereichsserver wird im Folgenden anhand des Gebietsbereichsservers BS1, der dem Gebietsbereich GB1 zugewiesen ist, erläutert. Die Funktionsweise gilt entsprechend für den dem Gebietsbereich GB2 zugewiesenen Gebietsbereichsserver BS2 sowie für den dem Gebietsbereich GB3 zugewiesenen Gebietsbereichsserver BS3.

Das erste Fahrzeug F1 und das zweite Fahrzeug F2 sind dazu ausgebildet, Wegedaten PW1, PW2 zu prognostizieren, die mindestens einen Fahrweg angeben, den das erste und zweite Fahrzeug F1, F2 mit einer gewissen Wahrscheinlichkeit in einer Zeit nach dem Prognostizieren der Wegedaten fahren werden. Die Wegedaten geben somit eine Prognose über einen zukünftigen Fahrweg der Fahrzeuge F1 und F2 an. Die prognostizierten Wegedaten können beispielsweise mindestens einen Fahrweg, den das Fahrzeug in den nächsten 10 bis 30 Minuten nach dem prognostizieren der Wegedaten fahren wird, angeben. Das erste und das zweite Fahrzeug weisen Sensoren S1, S2 zum Ermitteln von Sensordaten auf. Die Sensordaten können eine Position des jeweiligen Fahrzeugs und/oder einen Zustand des jeweiligen Fahrzeugs und/oder einen Zustand eines Ortes des jeweiligen Fahrzeugs und/oder einen Zustand eines Fahrers des jeweiligen Fahrzeugs, beispielweise ob der Fahrer ermüdet, unkonzentriert oder eventuell sogar eingeschlafen ist, angeben.

Das erste und das zweite Fahrzeug F1, F2 sind bei demjenigen Gebietsbereichsserver BS1, BS2 oder BS3 registriert, in dessen Gebietsbereich der durch die prognostizierten Wegedaten angegebene Fahrweg der jeweiligen Fahrzeuge liegt. Im Ausführungsbeispiel der Figur 1 wird beispielsweise angenommen, dass die durch die prognostizierten Wegedaten PW1, PW2 angegebenen Fahrwege der Fahrzeuge F1, F2 in dem Gebietsbereich GB1 liegen. Somit sind das erste und das zweite Fahrzeug F1, F2 bei dem Gebietsbereichsserver BS1 registriert.

Das erste und das zweite Fahrzeug F1, F2 sind des Weiteren dazu ausgebildet, die jeweils ermittelten Sensordaten zu demjenigen Gebietsbereichsserver zu senden, in dessen Zuständigkeitsbereich sie registriert sind. Im in der Figur 1 dargestellten Ausführungsbeispiel senden das erste und zweite Fahrzeug F1, F2 die jeweils ermittelten Sensordaten daher zu dem Gebietsbereichsserver BS1.

Die Gebietsbereichsserver BS1, BS2 und BS3 sind dazu ausgebildet, die von den in ihrem Zuständigkeitsbereich registrierten Fahrzeugen empfangenen Sensordaten auszuwerten und die Informationsdaten in Abhängigkeit von den empfangenen Sensordaten zu erzeugen. Im Ausführungsbeispiel der Figur 1 ist beispielsweise der Gebietsbereichsserver BS1 dazu ausgebildet, die von dem ersten Fahrzeug F1 empfangenen Sensordaten auszuwerten und in Abhängigkeit von den empfangenen Sensordaten des ersten Fahrzeugs F1 die Informationsdaten zu erzeugen.

Die Gebietsbereichsserver BS1, BS2 und BS3 sind dazu ausgebildet, die von ihnen erzeugten Informationsdaten zu denjenigen der bei ihnen registrierten Fahrzeuge zu senden, deren prognostizierte Wegedaten sich mit den prognostizierten Wegedaten des Fahrzeugs, auf Grundlage von dessen Sensordaten, die Informationsdaten ermittelt worden sind, überlappen. Im Ausführungsbeispiel der Figur 1 wird angenommen, dass sich die prognostizierten Wegedaten PW2 des zweiten Fahrzeugs F2 mit den prognostizierten Wegedaten PW1 des ersten Fahrzeugs F1 überlappen. Der Gebietsbereichsserver BS1 kann daher davon ausgehen, dass das zweite Fahrzeug F2 möglicherweise bald in denjenigen Straßenbereich des Gebietsbereichs GB1 einfahren wird, in dem bzw. in dessen Nähe sich auch das erste Fahrzeug F1 befindet.

Somit können die Informationsdaten, die anhand der Sensordaten des ersten Fahrzeugs F1 von dem Gebietsbereichsserver BS1 ermittelt worden sind, auch für das Steuern des zweiten Fahrzeugs F2 bei einem hochautomatisierten Fahren interessant bzw. relevant sein. Alle anderen Fahrzeuge, die ebenfalls in dem Gebietsbereich GB2 bei dem Gebietsbereichsserver BS1 registriert sind, sich jedoch in entfernteren Straßenabschnitten des Gebietsbereichs GB1 befinden, erhalten die Informationsdaten, die auf Grundlage der Sensordaten des ersten Fahrzeugs F1 ermittelt worden sind, nicht.

Die Informationsdaten, die anhand von prognostizierten Wegedaten eines Fahrzeugs bzw. einer Prognosedatenbank, die die prognostizierten Wegedaten enthält, ermittelt worden sind, werden somit nicht an alle Fahrzeuge, die bei dem Gebietsbereichsserver BS1 registriert sind, gesendet. Stattdessen erfolgt eine prognosegestützte Lastverteilung in einem Nachrichtennetz, beispielsweise einem Mobilfunknetz, bei der Verteilung von Informationsdaten zu den einzelnen Fahrzeugen in dem Gebietsbereich.

Gemäß einer weiteren möglichen Ausführungsform kann der Gebietsbereichsserver BS1 dazu ausgebildet ist, die erzeugten Informationsdaten zu dem zweiten Fahrzeug F2 zu senden, wenn der Ort, in Abhängigkeit von dessen Zustand die Informationsdaten erzeugt worden sind, entlang des mindestens einen Fahrwegs, den die prognostizierten Wegedaten des zweiten Fahrzeugs F2 angeben, liegt. Von dem Gebietsbereichsserver BS1 werden Informationsdaten nur an diejenigen Fahrzeuge gesendet, in deren prognostizierten Fahrbereich ein Ereignis, das durch die Informationsdaten angezeigt wird, aufgetreten ist. Ein Fahrzeug wird somit nur dann von dem zuständigen Gebietsbereichsserver über ein Ereignis in Kenntnis gesetzt, wenn das Ereignis tatsächlich im Prognosebereich des Fahrzeugs liegt.

Als Voraussetzung des angegebenen Verfahrens bzw. Systems wird angenommen, dass jedes Fahrzeug seine erfassten Sensordaten mit Geokoordinaten an den Gebietsbereichsserver, bei dem das Fahrzeug registriert ist, versendet und dass ein Mechanismus existiert, der diese Koordinaten auf ein Straßennetz abbildet. Dieser Prozess wird üblicherweise als "Map-Matching" bezeichnet. Als weitere Annahme muss erfüllt sein, dass alle beteiligten Komponenten, Fahrzeuge und Server, über eine Kartendatenbank verfügen, die es erlaubt, Straßenabschnitte eindeutig zu identifizieren. Ein Straßenabschnitt wird dabei als längste Strecke zwischen zwei beliebigen Punkten (Koordinaten) ohne einen weiteren abgehenden Straßenabschnitt definiert.

Jedes an dem hochautomatisierten Fahren teilnehmende Fahrzeug verfügt über prognostizierte Wegedaten, die beispielsweise in einer Prognosedatenbank abgespeichert sind und laufend aktualisiert werden. Die prognostizierten Wegedaten enthalten beispielsweise mögliche Straßenabschnitte, die in nächster Zeit, beispielsweise in den nächsten Minuten, von einem Fahrzeug befahren werden. Die prognostizierten Wegedaten bzw. die Prognosedatenbank wird an den dedizierten Gebietsbereichsserver, bei dem das entsprechende Fahrzeug registriert ist, gesendet.

Das System bzw. das Verfahren zum Bereitstellen der Daten für Fahrzeuge sieht des Weiteren einen Gebietsserver GS zum Aufteilen des Gebiets G in verschiedene Gebietsbereiche vor. Im Ausführungsbeispiel der Figur 1 ist das Gebiet G von dem Gebietsserver GS beispielsweise in die Gebietsbereiche GB1, GB2 und GB3 aufgeteilt. Die Fahrzeuge sind dazu ausgebildet, insbesondere bei einer Initialisierung des Systems, ihre jeweilig prognostizierten Wegedaten PW1, PW2, PW3 zu dem Gebietsserver GS zu senden. Der Gebietsserver GS ist dazu ausgebildet, eine jeweilige Größe der Gebietsbereiche GB1, GB2 und GB3 in Abhängigkeit von den jeweilig prognostizierten Wegedaten PW1, PW2 und PW3 der Fahrzeuge festzulegen. Dadurch kann eine Gleichverteilung der Fahrzeuge auf die vorhandenen Gebietsbereichsserver sichergestellt werden.

Gemäß eine weiteren möglichen Ausführungsform kann der Gebietsserver GS dazu ausgebildet sein, insbesondere bei der ersten Initialisierung bzw. Anmeldung von Fahrzeugen im System zum hochautomatisierten Fahren, in Abhängigkeit davon, ob der durch die jeweilig prognostizierten Wegedaten des entsprechenden Fahrzeugs angegebene Fahrweg in einem bestimmten Gebietsbereich liegt, das Fahrzeug bei dem entsprechenden Gebietsbereichsserver zu registrieren. Im Ausführungsbeispiel der Figur 1 überträgt beispielsweise das Fahrzeug F1 bei der ersten Anmeldung im System seine prognostizierten Wegedaten PW1 an den Gebietsserver GS. Der Gebietsserver GS wertet die prognostizierten Wegedaten PW1 des Fahrzeugs F1 aus und bestimmt anhand dieser Auswertung einen für das Fahrzeug F1 zuständigen Gebietsbereichsserver. Im Ausführungsbeispiel der Figur 1 wird beispielsweise der Gebietsbereichsserver BS1 zur Kommunikation mit dem Fahrzeug F1 bestimmt. Das Fahrzeug F1 wird daher bei dem Gebietsbereichsserver BS1 zur Abwicklung der weiteren Kommunikation registriert.

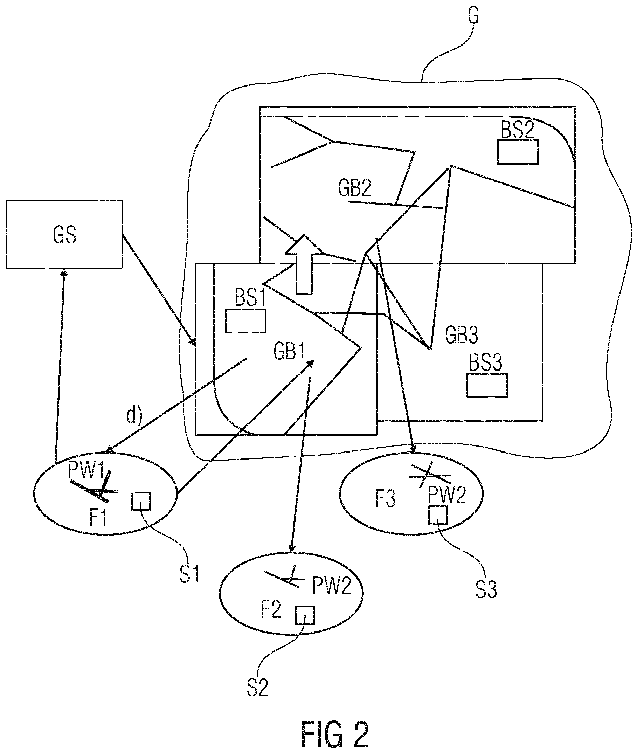

Figur 2 zeigt eine weitere mögliche Ausführungsform des Systems bzw. des Verfahrens zum Bereitstellen von Informationsdaten für Fahrzeuge, insbesondere bei einem hochautomatisierten Fahren. Im Ausführungsbeispiel der Figur 2 ist ein Fahrzeug F3 einem Gebietsbereichsserver BS2, der für Fahrzeuge in dem Gebietsbereich GB2 zuständig ist, zugeordnet. Die Kommunikation zu dem Fahrzeug F3 wird somit durch den Gebietsbereichsserver BS2 abgewickelt. Der Gebietsbereichsserver BS1 ist dazu ausgebildet, die in Abhängigkeit von den Sensordaten des ersten Fahrzeugs F1 ermittelten Informationsdaten an den weiteren Gebietsbereichsserver BS2 zu senden, wenn der durch die prognostizierten Wegedaten PW1 des ersten Fahrzeugs F1 angegebene Fahrweg teilweise in dem Gebietsbereich GB1 und teilweise in dem weiteren Gebietsbereich GB2 liegt und das Fahrzeug F1 bei dem Gebietsbereichsserver BS1 registriert ist.

Im Ausführungsbeispiel der Figur 2 prognostiziert das Fahrzeug F3 Wegedaten PW3, die mindestens einen Fahrweg angeben, den das dritte Fahrzeug F3 mit einer Wahrscheinlichkeit in der Zeit nach dem Prognostizieren der Wegedaten fahren wird und der in dem Gebietsbereich GB2 des Gebietsbereichsservers BS2 liegt. Somit ist das dritte Fahrzeug F3 bei dem weiteren Gebietsbereichsserver BS2 registriert. Der weitere Gebietsbereichsserver BS2 ist dazu ausgebildet, die von dem Gebietsbereichsserver BS1 empfangenen Informationsdaten, die der Gebietsbereichsserver BS1 anhand von Sensordaten des ersten Fahrzeugs F1 ermittelt hat, an das dritte Fahrzeug F3 zu senden. Somit erhält ein Fahrzeug, das sich beispielsweise am Rand eines Gebietsbereichs aufhält, auch Informationen von Fahrzeugen, die einem benachbarten Gebietsbereichsserver zugeordnet sind.

Gemäß einer weiteren möglichen Ausführungsform kann ein Gebietsbereichsserver, bei dem ein Fahrzeug registriert ist, einem Prognosebereich des Fahrzeugs, das heißt einem Teilbereich eines Gebietsbereichs, in dem der mindestens eine Fahrweg, der den prognostizierten Wegedaten zugeordnet ist, liegt, eine eigene Adresse (Pseudoadresse) zuweisen, wenn der prognostizierte Fahrweg beziehungsweise der Prognosebereich des Fahrzeugs zumindest teilweise in einem Gebietsbereich liegt, der einem benachbarten Gebietsbereichsserver zugeordnet ist. Im in Figur 2 dargestellten Ausführungsbeispiel sei angenommen, dass das Fahrzeug F3 beispielsweise zum ersten Mal einen Prognosebereich, der teilweise zum Gebietsbereich GB1 und teilweise zum Gebietsbereich GB2 gehört, hat. Diesem Bereich wird von dem Gebietsbereichsserver BS2 eine Pseudoadresse zugewiesen, wobei die Pseudoadresse die Adresse des Gebietsbereichsservers BS2 selbst ist. Die dem Prognosebereich des Fahrzeugs F3 zugewiesene Pseudoadresse wird von dem Gebietsbereichsserver BS2 an den Gebietsbereichsserver BS1 übermittelt. Der Gebietsbereichsserver BS1 behandelt nun den Prognosebereich des Fahrzeugs F3 wie einen Bereich in seinem eigenen Gebietsbereich GB1. Das Fahrzeug F3 bleibt weiterhin bei dem Gebietsbereichsserver BS2 registriert. Wenn nun von dem Gebietsbereichsserver BS1 Informationsdaten erzeugt werden, die ein Ereignis kennzeichnen, das in dem Prognosebereich des Fahrzeugs F3 liegt, werden die das Ereignis kennzeichnenden Informationsdaten an die Pseudoadresse und somit an den Gebietsbereichsserver BS2 weitergeleitet. Die Informationsdaten, die von dem Gebietsbereichsserver BS1 erzeugt worden sind, werden dann von dem Gebietsbereichsserver BS2 an das Fahrzeug F3 übermittelt.

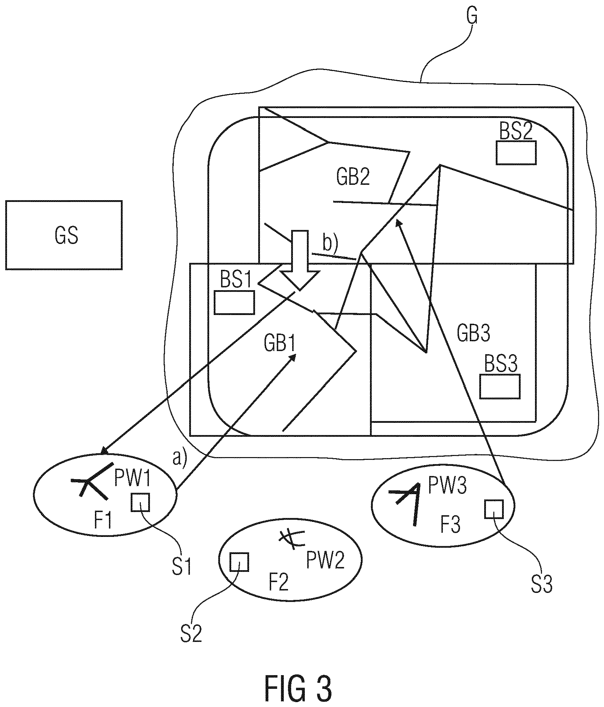

Figur 3 zeigt eine weitere Ausführungsform des Systems und Verfahrens zum Bereitstellen von Informationsdaten für Fahrzeuge. Im Ausführungsbeispiel der Figur 3 sind entsprechend der Figur 2 die Fahrzeuge F1 und F2 bei dem Gebietsbereichsserver BS1 registriert. Das Fahrzeug F3 ist bei dem Gebietsbereichsserver BS2 registriert. Das dritte Fahrzeug F3 weist Sensoren S3 zum Ermitteln von Sensordaten auf, wobei die Sensordaten des dritten Fahrzeugs F3 eine Position des dritten Fahrzeugs und/oder einen Zustand des dritten Fahrzeugs und/oder einen Zustand der Umgebung des dritten Fahrzeugs und/oder einen Zustand des Fahrers des dritten Fahrzeugs F3 angeben. Das dritte Fahrzeug F3 ist dazu ausgebildet, die ermittelten Sensordaten zu dem weiteren Gebietsbereichsserver BS2 zu senden, bei dem das dritte Fahrzeug F3 registriert ist. Der Gebietsbereichsserver BS2 ist dazu ausgebildet, die Sensordaten des dritten Fahrzeugs F3 auszuwerten und weitere Informationsdaten in Abhängigkeit von den Sensordaten des dritten Fahrzeugs F3 zu erzeugen.

Der weitere Gebietsbereichsserver BS2 kann des Weiteren dazu ausgebildet sein, die weiteren Informationsdaten zu dem Gebietsbereichsserver BS1 zu senden. Die weiteren Informationsdaten werden von dem weiteren Gebietsbereichsserver BS2 insbesondere dann an den Bereichsserver BS1 übertragen, wenn die prognostizierten Wegedaten PW1, PW2 von einem der beiden Fahrzeuge F1, F2, die bei dem Gebietsbereichsserver BS1 registriert sind, einen Fahrweg angeben, der teilweise in dem Gebietsbereich GB1 und teilweise in dem Gebietsbereich GB2 liegt und wenn zusätzlich das Fahrzeug F1, F2 bei dem Gebietsbereichsserver BS1 registriert ist. In diesem Fall übermittelt der weitere Gebietsbereichsserver BS2 die von ihm auf Grundlage der Sensordaten des dritten Fahrzeugs F3 ermittelten Informationsdaten zu dem Gebietsbereichsserver BS1, der wiederum die von dem weiteren Gebietsbereichsserver BS2 empfangenen Informationsdaten an dasjenige Fahrzeug, das sich im Übergangsbereich zwischen den Gebietsbereichen GB1 und GB2 befindet, übermittelt.

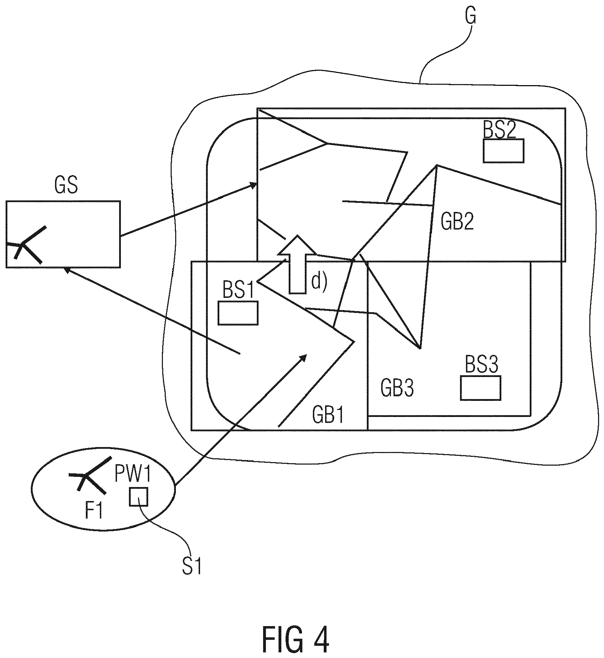

Figur 4 zeigt eine weitere Ausführungsform des Systems und Verfahrens zum Bereitstellen von Informationsdaten für Fahrzeuge. Im Ausführungsbeispiel der Figur 4 wird angenommen, dass die von dem ersten Fahrzeug F1 prognostizierten Wegedaten bzw. die Prognosedatenbank PW1 dem Gebietsbereichsserver BS1 anzeigen, dass das erste Fahrzeug F1 mit hoher Wahrscheinlichkeit bald den Gebietsbereich GB1 verlassen wird.

Der Gebietsbereichsserver BS1 kann in diesem Fall die von dem ersten Fahrzeug F1 empfangenen prognostizierten Wegedaten bzw. die Prognosedatenbank PW1 des ersten Fahrzeugs F1 an den Gebietsserver GS übermitteln. Der Gebietsserver GS wertet die empfangenen prognostizierten Wegedaten PW1 des ersten Fahrzeugs F1 aus und ermittelt gegebenenfalls einen neuen zuständigen Gebietsbereichsserver.

Im Ausführungsbeispiel der Figur 4 stellt der Gebietsserver GS beispielsweise fest, dass die prognostizierten Wegedaten PW1 einen Fahrweg angeben, der dem Gebietsbereich GB2 des Gebietsbereichsservers BS2 zugeordnet ist. Von dem Gebietsserver GS wird in diesem Fall die Registrierung des ersten Fahrzeugs F1 bei dem Gebietsbereichsserver BS1 gelöscht und stattdessen das erste Fahrzeug F1 zur Abwicklung der weiteren Kommunikation bei dem weiteren Gebietsbereichsserver BS2 registriert. Der Gebietsbereichsserver BS1 kann in diesem Fall beispielsweise Informationsdaten, die er bereits anhand von Sensordaten des ersten Fahrzeugs F1 ermittelt hat, an den weiteren Gebietsbereichsserver BS2 übermitteln.

## Patentansprüche

1. System zur Bereitstellung von Daten für Fahrzeuge zur Unterstützung eines hochautomatisierten Fahrens, umfassend:
- mindestens ein erstes und zweites der Fahrzeuge (F1, F2),
- einen Gebietsbereichsserver (BS1) zum Bereitstellen von Informationsdaten für die Fahrzeuge (F1, F2) in einem Gebietsbereich (GB1), wobei die Informationsdaten eine Information für das Steuern der Fahrzeuge (F1, F2) enthalten,
- wobei das erste und zweite Fahrzeug (F1, F2) jeweils dazu ausgebildet sind, Wegedaten (PW1, PW2) zu prognostizieren, die mindestens einen Fahrweg angeben, den das erste und zweite Fahrzeug (F1, F2) mit einer Wahrscheinlichkeit in einer Zeit nach dem Prognostizieren der Wegedaten (PW1, PW2) fahren werden, wobei jedes Fahrzeug (F1, F2) über prognostizierte Wegedaten (PW1, PW2) verfügt und die prognostizierten Wegedaten an den Gebietsbereichsserver (BS1), bei dem das entsprechende Fahrzeug (F1, F2) registriert ist, gesendet werden,
- wobei das erste und zweite Fahrzeug (F1, F2) Sensoren (S1, S2) zum Ermitteln von Sensordaten aufweisen, wobei die Sensordaten eine Position des jeweiligen Fahrzeugs und/oder einen Zustand des jeweiligen Fahrzeugs und/oder einen Zustand eines Ortes des jeweiligen Fahrzeugs und/oder einen Zustand eines jeweiligen Fahrers des ersten und zweiten Fahrzeugs (F1, F2) angeben,
- wobei das erste und zweite Fahrzeug (F1, F2) bei dem Gebietsbereichsserver (BS1) registriert sind, wenn der jeweils durch die prognostizierten Wegedaten (PW1, PW2) angegebene Fahrweg des ersten und zweiten Fahrzeugs (F1, F2) in dem Gebietsbereich (GB1) liegen,
- wobei das erste und zweite Fahrzeug (F1, F2) dazu ausgebildet sind, die jeweils ermittelten Sensordaten zu dem Gebietsbereichsserver (BS1) zu senden, wenn das erste und zweite Fahrzeug (F1, F2) bei dem Gebietsbereichsserver (BS1) registriert sind, wobei das erste und das zweite Fahrzeug (F1, F2) dazu ausgebildet sind, die jeweils ermittelten Sensordaten zu demjenigen Gebietsbereichsserver (BS1) zu senden, in dessen Zuständigkeitsbereich sie registriert sind,
- wobei der Gebietsbereichsserver (BS1) dazu ausgebildet ist, die von dem ersten Fahrzeug (F1) empfangenen Sensordaten auszuwerten und die Informationsdaten in Abhängigkeit von den empfangenen Sensordaten des ersten Fahrzeugs (F1) zu erzeugen,
- wobei der Gebietsbereichsserver (BS1) dazu ausgebildet ist, die erzeugten Informationsdaten zu dem zweiten Fahrzeug (F2) zu senden, wenn sich die prognostizierten Wegedaten (PW2) des zweiten Fahrzeugs (F2) mit den prognostizierten Wegedaten (PW1) des ersten Fahrzeugs (F1) überlappen und das zweite Fahrzeug (F2) bei dem Gebietsbereichsserver (BS1) registriert ist, **dadadurch gekennzeichnet dass** das System ferner umfasst:
- einen Gebietsserver (GS) zum Aufteilen eines Gebiets (G) in den Gebietsbereich (GB1) und in mindestens einen weiteren Gebietsbereich (GB2),
- wobei die Fahrzeuge (F1, F2, F3) dazu ausgebildet sind, ihre jeweilig prognostizierten Wegedaten (PW1, PW2, PW3) zu dem Gebietsserver (GS) zu senden,
- wobei der Gebietsserver (GS) dazu ausgebildet ist, eine jeweilige Größe des Gebietsbereichs (GB1) und des mindestens einen weiteren Gebietsbereich (GB2) in Abhängigkeit von den jeweilig prognostizierten Wegedaten (PW1, PW2, PW3) der Fahrzeuge (F1, F2, F3) festzulegen.

2. System nach Anspruch 1, wobei der Gebietsbereichsserver (BS1) dazu ausgebildet ist, die erzeugten Informationsdaten zu dem zweiten Fahrzeug (F2) zu senden, wenn der Ort, in Abhängigkeit von dessen Zustand die Informationsdaten erzeugt worden sind, entlang des mindestens einen Fahrwegs, den die prognostizierten Wegedaten des zweiten Fahrzeugs (F2) angeben, liegt.

3. System nach Anspruch 1 oder 2, umfassend:
- mindestens einen weiteren Gebietsbereichsserver (BS2) zum Bereitstellen von weiteren Informationsdaten für Fahrzeuge (F3) in dem mindestens einen weiteren Gebietsbereich (GB2),
- wobei der Gebietsbereichsserver (BS1) dazu ausgebildet ist, die in Abhängigkeit von den Sensordaten des ersten Fahrzeugs (F1) ermittelten Informationsdaten an den mindestens einen weiteren Gebietsbereichsserver (BS2) zu senden, wenn der durch die prognostizierten Wegedaten (PW1) des ersten Fahrzeugs (F1) angegebene Fahrweg teilweise in dem Gebietsbereich (GB1) und teilweise in dem mindestens einen weiteren Gebietsbereich (GB2) liegt und das erste Fahrzeug (F1) bei den Gebietsbereichsserver (BS1) registriert ist.

4. System nach Anspruch 3, umfassend
- ein drittes der Fahrzeuge (F3), das dazu ausgebildet ist, Wegedaten (PW3) zu prognostizieren, die mindestens einen Fahrweg angeben, den das dritte Fahrzeug mit einer Wahrscheinlichkeit in der Zeit nach dem Prognostizieren der Wegedaten (PW3) fahren wird,
- wobei das dritte Fahrzeug (F3) bei dem mindestens einen weiteren Gebietsbereichsserver (BS2) registriert ist, wenn der durch die prognostizierten Wegedaten (PW3) des dritten Fahrzeugs (F3) angegebene Fahrweg in dem mindestens einen weiteren Gebietsbereich (GB2) liegt,
- wobei der mindestens eine weitere Gebietsbereichsserver (BS2) dazu ausgebildet ist, die von dem Gebietsbereichsserver (BS1) empfangenen Informationsdaten an das dritte Fahrzeug (F3) zu senden, wenn das dritte Fahrzeug (F3) bei dem mindestens einen weiteren Gebietsbereichsserver (BS2) registriert ist.

5. System nach Anspruch 4,
- wobei das dritte Fahrzeug (F3) Sensoren (S3) zum Ermitteln der Sensordaten aufweist, wobei die Sensordaten des dritten Fahrzeugs (F3) eine Position des dritten Fahrzeugs und einen Zustand des dritten Fahrzeugs und/oder einen Zustand der Umgebung des dritten Fahrzeugs angeben,
- wobei das dritte Fahrzeug (F3) dazu ausgebildet ist, die Sensordaten des dritten Fahrzeugs zu dem mindestens einen weiteren Gebietsbereichsserver (BS2) zu senden, wenn das dritte Fahrzeug (F3) bei dem mindestens einen weiteren Gebietsbereichsserver (BS2) registriert ist,
- wobei der mindestens eine weitere Gebietsbereichsserver (BS2) dazu ausgebildet ist, die Sensordaten des dritten Fahrzeugs (F3) auszuwerten und die weiteren Informationsdaten in Abhängigkeit von den Sensordaten des dritten Fahrzeugs (F3) zu erzeugen.

6. System nach Anspruch 5,
- wobei der mindestens eine weitere Gebietsbereichsserver (BS2) dazu ausgebildet ist, die weiteren Informationsdaten zu dem Gebietsbereichsserver (BS1) zu senden,
- wobei der Gebietsbereichsserver (BS1) dazu ausgebildet ist, die weiteren Informationsdaten zu dem ersten Fahrzeug (F1) zu senden, wenn der durch die prognostizierten Wegedaten (PW1) des ersten Fahrzeugs (F1) angegebene Fahrweg teilweise in dem Gebietsbereich (GB1) und teilweise in dem mindestens einen weiteren Gebietsbereich (GB2) liegt und das erste Fahrzeug (F1) bei dem Gebietsbereichsserver (BS1) registriert ist.

7. System nach einem der vorhergehenden Ansprüche,
- wobei die Registrierung des ersten Fahrzeugs (F1) bei dem Gebietsbereichsserver (BS1) gelöscht wird, wenn der durch die prognostizierten Wegedaten (PW1) des ersten Fahrzeugs angegebene Fahrweg nicht in dem Gebietsbereich (GB1) liegt,
- wobei das erste Fahrzeug (F1) bei dem mindestens einen weiteren Gebietsbereichsserver (BS2) registriert wird, wenn der durch die prognostizierten Wegedaten (PW1) des ersten Fahrzeugs (F1) angegebene Fahrweg in dem mindestens einen weiteren Gebietsbereich (GB2) liegt.

8. System nach einem der vorhergehenden Ansprüche,
- wobei der Gebietsserver (GS) dazu ausgebildet ist, die Fahrzeuge (F1, F2, F3) in Abhängigkeit davon, ob der durch die jeweiligen prognostizierten Wegedaten (PW1, PW2, PW3) angegebene Fahrweg in dem Gebietsbereich (GB1) oder dem mindestens einen weiteren Gebietsbereich (GB2) liegt, bei dem Gebietsbereichsserver (BS1) oder dem mindestens einen weiteren Gebietsbereichsserver (BS2) zu registrieren.

9. System nach einem der Ansprüche 1 bis 8, wobei die Sensordaten und die Informationsdaten über ein Mobilfunknetz gesendet werden.

10. Verfahren zur Bereitstellung von Daten für Fahrzeuge zur Unterstützung eines hochautomatisierten Fahrens, umfassend:
- Bereitstellen eines Gebietsbereichsservers (BS1) zum Bereitstellen von Informationsdaten für Fahrzeuge (F1, F2) in einem Gebietsbereich (GB1), wobei die Informationsdaten eine Information für das Steuern der Fahrzeuge (F1, F2) enthalten,
- Prognostizieren von Wegedaten (PW1, PW2) durch ein erstes und zweites Fahrzeug (F1, F2), wobei die jeweiligen Wegedaten (PW1, PW2) mindestens einen Fahrweg angeben, den das erste und zweite Fahrzeug (F1, F2) mit einer Wahrscheinlichkeit in einer Zeit nach dem Prognostizieren der Wegedaten (PW1, PW2) fahren werden, wobei jedes Fahrzeug (F1, F2) über prognostizierte Wegedaten (PW1, PW2) verfügt und die prognostizierten Wegedaten an den Gebietsbereichsserver (BS1), bei dem das entsprechende Fahrzeug (F1, F2) registriert ist, gesendet werden,
- Ermitteln von Sensordaten durch Sensoren (S1, S2) des ersten und zweiten Fahrzeugs (F1, F2), wobei die Sensordaten eine Position des jeweiligen Fahrzeugs und/oder einen Zustand des jeweiligen Fahrzeugs und/oder einen Zustand eines Ortes des jeweiligen Fahrzeugs und/oder einen Zustand eines jeweiligen Fahrers des ersten und zweiten Fahrzeugs (F1, F2) angeben,
- Registrieren des ersten und zweiten Fahrzeugs (F1, F2) bei dem Gebietsbereichsserver (BS1), wenn der jeweils durch die prognostizierten Wegedaten (PW1, PW2) angegebene Fahrweg des ersten und zweiten Fahrzeugs (F1, F2) in dem Gebietsbereich (GB1) liegt,
- Senden der von dem ersten und zweiten Fahrzeug (F1, F2) jeweils ermittelten Sensordaten zu dem Gebietsbereichsserver (GB1), wenn das erste und zweite Fahrzeug (F1, F2) bei dem Gebietsbereichsserver (GB1) registriert sind, wobei das erste und das zweite Fahrzeug (F1, F2) dazu ausgebildet sind, die jeweils ermittelten Sensordaten zu demjenigen Gebietsbereichsserver (BS1) zu senden, in dessen Zuständigkeitsbereich sie registriert sind,
- Auswerten der von dem ersten Fahrzeug (F1) empfangenen Sensordaten und Erzeugen der Informationsdaten in Abhängigkeit von den empfangenen Sensordaten des ersten Fahrzeugs (F1) durch den Gebietsbereichsserver (BS1),
- Senden der erzeugten Informationsdaten zu dem zweiten Fahrzeug (F2) durch den Gebietsbereichsserver (BS1), wenn sich die prognostizierten Wegedaten (PW2) des zweiten Fahrzeugs (F2) mit den prognostizierten Wegedaten (PW1) des ersten Fahrzeugs (F1) überlappen und das zweite Fahrzeug (F2) bei dem Gebietsbereichsserver (BS1) registriert ist, **dadurch gekennzeichnet dass** das Verfahren ferner umfasst:
- Bereitstellen eines Gebietsservers (GS) zum Aufteilen eines Gebiets (G) in den Gebietsbereich (GB1) und in mindestens einen weiteren Gebietsbereich (GB2),
- Senden der von den Fahrzeugen (F1, F2, F3) jeweilig prognostizierten Wegedaten (PW1, PW2, PW3) zu dem Gebietsserver (GS),
- Festlegen einer jeweilige Größe des Gebietsbereichs (GB1) und des mindestens einen weiteren Gebietsbereich (GB2) in Abhängigkeit von den jeweilig prognostizierten Wegedaten (PW1, PW2, PW3) der Fahrzeuge (F1, F2, F3) durch den Gebietsserver (GS) festzulegen.

11. Verfahren nach Anspruch 10, umfassend:
Senden der erzeugten Informationsdaten zu dem zweiten Fahrzeug (F2) durch den Gebietsbereichsserver (BS1), wenn der Ort, in Abhängigkeit von dessen Zustand die Informationsdaten erzeugt worden sind, entlang des mindestens einen Fahrwegs, den die prognostizierten Wegedaten des zweiten Fahrzeugs (F2) angeben, liegt.

12. Verfahren nach Anspruch 10 oder 11, umfassend:
- Bereitstellen von mindestens einem weiteren Gebietsbereichsserver (BS2) zum Bereitstellen von weiteren Informationsdaten für Fahrzeuge (F3) in dem mindestens einem weiteren Gebietsbereich (GB2),
- Senden der in Abhängigkeit von den Sensordaten des ersten Fahrzeugs (F1) ermittelten Informationsdaten an den mindestens einen weiteren Gebietsbereichsserver (BS2) durch den Gebietsbereichsserver (BS1), wenn der durch die prognostizierten Wegedaten (PW1) des ersten Fahrzeugs (F1) angegebene Fahrweg teilweise in dem Gebietsbereich (GB1) und teilweise in dem mindestens einen weiteren Gebietsbereich (GB2) liegt und das erste Fahrzeug (F1) bei den Gebietsbereichsserver (BS1) registriert ist,
- Prognostizieren von Wegedaten (PW3) durch ein drittes der Fahrzeuge (F3), wobei die prognostizierten Wegedaten (PW3) des dritten Fahrzeugs mindestens einen Fahrweg angeben, den das dritte Fahrzeug (F3) mit einer Wahrscheinlichkeit in der Zeit nach dem Prognostizieren der Wegedaten (PW3) fahren wird,
- Registrieren des dritten Fahrzeug (F3) bei dem mindestens einen weiteren Gebietsbereichsserver (BS2), wenn der durch die prognostizierten Wegedaten (PW3) des dritten Fahrzeugs (F3) angegebene Fahrweg in dem mindestens einen weiteren Gebietsbereich (GB2) liegt,
- Senden der von dem Gebietsbereichsserver (BS1) empfangenen Informationsdaten an das dritte Fahrzeug (F3) durch den mindestens einen weiteren Gebietsbereichsserver (BS2), wenn das dritte Fahrzeug (F3) bei dem mindestens einen weiteren Gebietsbereichsserver (BS2) registriert ist.

13. Verfahren nach Anspruch 12, umfassend:
- Bereitstellen des dritten Fahrzeugs (F3) mit Sensoren (S3) zum Ermitteln der Sensordaten, wobei die Sensordaten des dritten Fahrzeugs (F3) eine Position des dritten Fahrzeugs und einen Zustand des dritten Fahrzeugs und/oder einen Zustand der Umgebung des dritten Fahrzeugs angeben,
- Senden der Sensordaten des dritten Fahrzeugs zu dem mindestens einen weiteren Gebietsbereichsserver (BS2) durch das dritte Fahrzeug (F3), wenn das dritte Fahrzeug (F3) bei dem mindestens einen weiteren Gebietsbereichsserver (BS2) registriert ist,
- Auswerten der Sensordaten des dritten Fahrzeugs (F3) und Erzeugen der weiteren Informationsdaten in Abhängigkeit von den Sensordaten des dritten Fahrzeugs (F3) durch den mindestens einen weiteren Gebietsbereichsserver (BS2),
- Senden der weiteren Informationsdaten zu dem Gebietsbereichsserver (BS1) durch den mindestens einen weiteren Gebietsbereichsserver (BS2),
- Senden der weiteren Informationsdaten zu dem ersten Fahrzeug (F1) durch den Gebietsbereichsserver (BS1), wenn der durch die prognostizierten Wegedaten (PW1) des ersten Fahrzeugs (F1) angegebene Fahrweg teilweise in dem Gebietsbereich (GB1) und teilweise in dem mindestens einen weiteren Gebietsbereich (GB2) liegt und das erste Fahrzeug (F1) bei dem Gebietsbereichsserver (BS1) registriert ist.

14. Verfahren nach einem der Ansprüche 10 bis 13, umfassend:
- Löschen der Registrierung des ersten Fahrzeugs (F1) bei dem Gebietsbereichsserver (BS1), wenn der durch die prognostizierten Wegedaten (PW1) des ersten Fahrzeugs angegebene Fahrweg nicht in dem Gebietsbereich (GB1) liegt,
- Registrieren des ersten Fahrzeugs (F1) bei dem mindestens einen weiteren Gebietsbereichsserver (BS2), wenn der durch die prognostizierten Wegedaten (PW1) des ersten Fahrzeugs (F1) angegebene Fahrweg in dem mindestens einen weiteren Gebietsbereich (GB2) liegt.

15. Verfahren nach einem der Ansprüche 10 bis 14, umfassend: Registrieren der Fahrzeuge (F1, F2, F3) bei dem Gebietsbereichsserver (BS1) oder dem mindestens einen weiteren Gebietsbereichsserver (BS2) durch den Gebietsserver (GS) in Abhängigkeit davon, ob der durch die jeweiligen prognostizierten Wegedaten (PW1, PW2, PW3) angegebene Fahrweg in dem Gebietsbereich (GB1) oder dem mindestens einen weiteren Gebietsbereich (GB2) liegt.

## Claims

1. System for providing data for vehicles to assist highly automated driving, comprising:
- at least one first and one second one of the vehicles (F1, F2),
- a region server (BS1) for providing information data for the vehicles (F1, F2) in a region (GB1), the information data containing an item of information for controlling the vehicles (F1, F2),
- the first and second vehicles (F1, F2) each being designed to predict path data (PW1, PW2) indicating at least one route which will probably be driven by the first and second vehicles (F1, F2) in a time after predicting the path data (PW1, PW2), to assist highly automated driving, each vehicle (F1, F2) having predicted path data (PW1, PW2), and the predicted path data being transmitted to the region server (BS1) with which the corresponding vehicle (F1, F2) is registered,
- the first and second vehicles (F1, F2) having sensors (S1, S2) for determining sensor data, the sensor data indicating a position of the respective vehicle and/or a state of the respective vehicle and/or a state of a location of the respective vehicle and/or a state of a respective driver of the first and second vehicles (F1, F2),
- the first and second vehicles (F1, F2) being registered with the region server (BS1) if the route of the first and second vehicles (F1, F2) respectively indicated by the predicted path data (PW1, PW2) is in the region (GB21),
- the first and second vehicles (F1, F2) being designed to transmit the respectively determined sensor data to the region server (BS1) if the first and second vehicles (F1, F2) are registered with the region server (BS1), the first and second vehicles (F1, F2) being designed to transmit the respectively determined sensor data to the region server (BS1) in whose responsibility region they are registered,
- the region server (BS1) being designed to evaluate the sensor data received from the first vehicle (F1) and to generate the information data on the basis of the sensor data received from the first vehicle (F1),
- the region server (BS1) being designed to transmit the generated information data to the second vehicle (F2) if the predicted path data (PW2) from the second vehicle (F2) overlap the predicted path data (PW1) from the first vehicle (F1) and the second vehicle (F2) is registered with the region server (BS1), **characterized in that** the system further comprises:
- an area server (GS) for dividing an area (G) into the region (GB1) and into at least one further region (GB2),
- the vehicles (F1, F2, F3) being designed to transmit their respectively predicted path data (PW1, PW2, PW3) to the area server (GS),
- the area server (GS) being designed to determine a respective size of the region (GB1) and of the at least one further region (GB2) on the basis of the respectively predicted path data (PW1, PW2, PW3) from the vehicles (F1, F2, F3).

2. System according to Claim 1, the region server (BS1) being designed to transmit the generated information data to the second vehicle (F2) if the location, on the basis of whose state the information data have been generated, is along the at least one route indicated by the predicted path data from the second vehicle (F2).

3. System according to Claim 1 or 2, comprising:
- at least one further region server (BS2) for providing further information data for vehicles (F3) in the at least one further region (GB2),
- the region server (BS1) being designed to transmit the information data determined on the basis of the sensor data from the first vehicle (F1) to the at least one further region server (BS2) if the route indicated by the predicted path data (PW1) from the first vehicle (F1) is partially in the region (GB1) and partially in the at least one further region (GB2) and the first vehicle (F1) is registered with the region server (BS1).

4. System according to Claim 3, comprising
- a third one of the vehicles (F3) which is designed to predict path data (PW3) indicating at least one route which will probably be driven by the third vehicle in the time after predicting the path data (PW3),
- the third vehicle (F3) being registered with the at least one further region server (BS2) if the route indicated by the predicted path data (PW3) from the third vehicle (F3) is in the at least one further region (GB2),
- the at least one further region server (BS2) being designed to transmit the information data received from the region server (BS1) to the third vehicle (F3) if the third vehicle (F3) is registered with the at least one further region server (BS2).

5. System according to Claim 4,
- the third vehicle (F3) having sensors (S3) for determining the sensor data, the sensor data from the third vehicle (F3) indicating a position of the third vehicle and a state of the third vehicle and/or a state of the environment of the third vehicle,
- the third vehicle (F3) being designed to transmit the sensor data from the third vehicle to the at least one further region server (BS2) if the third vehicle (F3) is registered with the at least one further region server (BS2),
- the at least one further region server (BS2) being designed to evaluate the sensor data from the third vehicle (F3) and to generate the further information data on the basis of the sensor data from the third vehicle (F3).

6. System according to Claim 5,
- the at least one further region server (BS2) being designed to transmit the further information data to the region server (BS1),
- the region server (BS1) being designed to transmit the further information data to the first vehicle (F1) if the route indicated by the predicted path data (PW1) from the first vehicle (F1) is partially in the region (GB1) and partially in the at least one further region (GB2) and the first vehicle (F1) is registered with the region server (BS1).

7. System according to one of the preceding claims,
- the registration of the first vehicle (F1) with the region server (BS1) being deleted if the route indicated by the predicted path data (PW1) from the first vehicle is not in the region (GB1),
- the first vehicle (F1) being registered with the at least one further region server (BS2) if the route indicated by the predicted path data (PW1) from the first vehicle (F1) is in the at least one further region (GB2).

8. System according to one of the preceding claims,
- the area server (GS) being designed to register the vehicles (F1, F2, F3) with the region server (BS2) or the at least one further region server (BS2) on the basis of whether the route indicated by the respective predicted path data (PW1, PW2, PW3) is in the region (GB1) or the at least one further region (GB2).

9. System according to one of Claims 1 to 8, the sensor data and the information data being transmitted via a mobile radio network.

10. Method for providing data for vehicles to assist highly automated driving, comprising:
- providing a region server (BS1) for providing information data for vehicles (F1, F2) in a region (GB1), the information data containing an item of information for controlling the vehicles (F1, F2),
- predicting path data (PW1, PW2) by means of a first and a second vehicle (F1, F2), the respective path data (PW1, PW2) indicating at least one route which will probably be driven by the first and second vehicles (F1, F2) in a time after predicting the path data (PW1, PW2), to assist highly automated driving, each vehicle (F1, F2) having predicted path data (PW1, PW2), and the predicted path data being transmitted to the region server (BS1) with which the corresponding vehicle (F1, F2) is registered,
- determining sensor data by means of sensors (S1, S2) in the first and second vehicles (F1, F2), the sensor data indicating a position of the respective vehicle and/or a state of the respective vehicle and/or a state of a location of the respective vehicle and/or a state of a respective driver of the first and second vehicles (F1, F2),
- registering the first and second vehicles (F1, F2) with the region server (BS1) if the route of the first and second vehicles (F1, F2) respectively indicated by the predicted path data (PW1, PW2) is in the region (GB1),
- transmitting the sensor data respectively determined by the first and second vehicles (F1, F2) to the region server (GB1) if the first and second vehicles (F1, F2) are registered with the region server (GB1), the first and second vehicles (F1, F2) being designed to transmit the respectively determined sensor data to the region server (BS1) in whose responsibility region they are registered,
- evaluating the sensor data received from the first vehicle (F1) and generating the information data on the basis of the sensor data received from the first vehicle (F1) by means of the region server (BS1),
- transmitting the generated information data to the second vehicle (F2) by means of the region server (BS1) if the predicted path data (PW2) from the second vehicle (F2) overlap the predicted path data (PW1) from the first vehicle (F1) and the second vehicle (F2) is registered with the region server (BS1), **characterized in that** the method further compromises:
- providing an area server (GS) for dividing an area (G) into the region (GB1) and into at least one further region (GB2),
- transmitting the path data (PW1, PW2, PW3) respectively predicted by the vehicles (F1, F2, F3) to the area server (GS),
- determining a respective size of the region (GB1) and of the at least one further region (GB2) on the basis of the respectively predicted path data (PW1, PW2, PW3) from the vehicles (F1, F2, F3) by means of the area server (GS).

11. Method according to Claim 10, comprising:
transmitting the generated information data to the second vehicle (F2) by means of the region server (BS1) if the location, on the basis of whose state the information data have been generated, is along the at least one route indicated by the predicted path data from the second vehicle (F2).

12. Method according to Claim 10 or 11, comprising:
- providing at least one further region server (BS2) for providing further information data for vehicles (F3) in the at least one further region (GB2),
- transmitting the information data determined on the basis of the sensor data from the first vehicle (F1) to the at least one further region server (BS2) by means of the region server (BS1) if the route indicated by the predicted path data (PW1) from the first vehicle (F1) is partially in the region (GB1) and partially in the at least one further region (GB2) and the first vehicle (F1) is registered with the region server (BS1),
- predicting path data (PW3) by means of a third one of the vehicles (F3), the predicted path data (PW3) from the third vehicle indicating at least one route which will probably be driven by the third vehicle (F3) in the time after predicting the path data (PW3),
- registering the third vehicle (F3) with the at least one further region server (BS2) if the route indicated by the predicted path data (PW3) from the third vehicle (F3) is in the at least one further region (GB2),
- transmitting the information data received from the region server (BS1) to the third vehicle (F3) by means of the at least one further region server (BS2) if the third vehicle (F3) is registered with the at least one further region server (BS2).

13. Method according to Claim 12, comprising:
- providing the third vehicle (F3) having sensors (S3) for determining the sensor data, the sensor data from the third vehicle (F3) indicating a position of the third vehicle and a state of the third vehicle and/or a state of the environment of the third vehicle,
- transmitting the sensor data from the third vehicle to the at least one further region server (BS2) by means of the third vehicle (F3) if the third vehicle (F3) is registered with the at least one further region server (BS2),
- evaluating the sensor data from the third vehicle (F3) and generating the further information data on the basis of the sensor data from the third vehicle (F3) by means of the at least one further region server (BS2),
- transmitting the further information data to the region server (BS1) by means of the at least one further region server (BS2),
- transmitting the further information data to the first vehicle (F1) by means of the region server (BS1) if the route indicated by the predicted path data (PW1) from the first vehicle (F1) is partially in the region (GB1) and partially in the at least one further region (GB2) and the first vehicle (F1) is registered with the region server (BS1).

14. Method according to one of Claims 10 to 13, comprising:
- deleting the registration of the first vehicle (F1) with the region server (BS1) if the route indicated by the predicted path data (PW1) from the first vehicle is not in the region (GB1),
- registering the first vehicle (F1) with the at least one further region server (BS2) if the route indicated by the predicted path data (PW1) from the first vehicle (F1) is in the at least one further region (GB2).

15. Method according to one of Claims 10 to 14, comprising:
registering the vehicles (F1, F2, F3) with the region server (BS1) or the at least one further region server (BS2) by means of the area server (GS) on the basis of whether the route indicated by the respective predicted path data (PW1, PW2, PW3) is in the region (GB1) or the at least one further region (GB2).

## Revendications

1. Système de mise à disposition de données destinées à des véhicules pour la prise en charge d'une conduite hautement automatisée, comprenant :
- au moins un premier et un deuxième véhicule (F1, F2),
- un serveur de domaine régional (BS1) servant à fournir des données informationnelles aux véhicules (F1, F2) dans un domaine régional (GB1), dans lequel les données informationnelles contiennent des informations destinées à la commande des véhicules (F1, F2),
- dans lequel les premier et deuxième véhicules (F1, F2) sont respectivement conçus pour prédire des données d'itinéraires (PW1, PW2) qui indiquent au moins un itinéraire que les premier et deuxième véhicules (F1, F2) vont parcourir avec une certaine probabilité en un certain temps après la prédiction des données d'itinéraires (PW1, PW2), dans lequel chaque véhicule (F1, F2) dispose de données d'itinéraires (PW1, PW2) prédites et les données d'itinéraires prédites sont envoyées au serveur de domaine régional (BS1) sur lequel le véhicule (F1, F2) correspondant est enregistré,
- dans lequel les premier et deuxième véhicules (F1, F2) comportent des capteurs (S1, S2) destinés à déterminer des données de capteurs, dans lequel les données de capteurs indiquent une position du véhicule respectif et/ou un état du véhicule respectif et/ou un état d'un lieu du véhicule respectif, et/ou un état d'un conducteur respectif des premier et deuxième véhicules (F1, F2),
- dans lequel les premier et deuxième véhicules (F1, F2) sont enregistrés sur le serveur de domaine régional (BS1) lorsque l'itinéraire respectivement indiqué par les données d'itinéraires (PW1, PW2) prédites des premier et deuxième véhicules (F1, F2) se situe dans le domaine régional (GB1),
- dans lequel les premier et deuxième véhicules (F1, F2) sont conçus pour envoyer les données de capteurs respectivement déterminées au serveur de domaine régional (BS1) lorsque les premier et deuxième véhicules (F1, F2) sont enregistrés sur le serveur de domaine régional (BS1), dans lequel les premier et deuxième véhicules (F1, F2) sont conçus pour envoyer les données de capteurs respectivement déterminées au serveur de domaine régional (BS1) dans le domaine de responsabilité duquel ils sont enregistrés,
- dans lequel le serveur de domaine régional (BS1) est conçu pour évaluer les données de capteurs reçues en provenance du premier véhicule (F1) et pour générer les données informationnelles en fonction des données de capteurs du premier véhicule (F1) ayant été reçues,
- dans lequel le serveur de domaine régional (BS1) est conçu pour envoyer les données informationnelles générées au deuxième véhicule (F2) lorsque les données d'itinéraires (PW2) prédites du deuxième véhicule (F2) recoupent les données d'itinéraires (PW1) prédites du premier véhicule (F1) et lorsque le deuxième véhicule (F2) est enregistré sur le serveur de domaine régional (BS1), **caractérisé en ce que** le système comprend en outre :
- un serveur de domaine (GS) destiné à diviser une région (G) en le domaine régional (GB1) et en au moins un autre domaine régional (GB2),
- dans lequel les véhicules (F1, F2, F3) sont conçus pour envoyer leurs données d'itinéraires (PW1, PW2, PW3) respectivement prédites au serveur régional (GS),
- dans lequel le serveur régional (GS) est conçu pour établir une taille respective du domaine régional (GB1) et dudit au moins un autre domaine régional (GB2) en fonction des données d'itinéraires (PW1, PW2, PW3) respectivement prédites des véhicules (F1, F2, F3).

2. Système selon la revendication 1, dans lequel le serveur de domaine régional (BS1) est conçu pour envoyer les données informationnelles générées au deuxième véhicule (F2) lorsque le lieu en fonction de l'état duquel les données informationnelles ont été générées se situe sur ledit au moins un itinéraire indiqué par les données d'itinéraires prédites du deuxième véhicule (F2).

3. Système selon la revendication 1 ou 2, comprenant :
- au moins un autre serveur de domaine régional (BS2) destiné à fournir d'autres données informationnelles à des véhicules (F3) dans ledit au moins un autre domaine régional (GB2),
- dans lequel le serveur de domaine régional (BS1) est conçu pour envoyer les données informationnelles déterminées en fonction des données de capteurs du premier véhicule (F1) audit au moins un autre serveur de domaine régional (BS2) lorsque l'itinéraire indiqué par les données d'itinéraires (PW1) prédites du premier véhicule (F1) se situe en partie dans le domaine régional (GB1) et en partie dans ledit au moins un autre domaine régional (GB2) et lorsque le premier véhicule (F1) est enregistré sur le serveur de domaine régional (BS1).

4. Système selon la revendication 3, comprenant :
- un troisième des véhicules (F3) qui est conçu pour prédire des données d'itinéraires (PW3) indiquant au moins un itinéraire qui est parcouru par le troisième véhicule avec une certaine probabilité au cours dudit temps après la prédiction des données d'itinéraires (PW3),
- dans lequel le troisième véhicule (F3) est enregistré sur ledit au moins un serveur de domaine régional (BS2) lorsque l'itinéraire indiqué par les données d'itinéraires (PW3) prédites du troisième véhicule (F3) se situe dans ledit au moins un autre domaine régional (GB2),
- dans lequel ledit au moins un autre serveur de domaine régional (BS2) est conçu pour envoyer les données informationnelles reçues en provenance du serveur de domaine régional (BS1) au troisième véhicule (F3) lorsque le troisième véhicule (F3) est enregistré sur ledit au moins un autre serveur de domaine régional (BS2).

5. Système selon la revendication 4,
- dans lequel le troisième véhicule (F3) comporte des capteurs (S3) destinés à déterminer les données de capteurs, dans lequel les données de capteurs du troisième véhicule (F3) indiquent une position du troisième véhicule et un état du troisième véhicule et/ou un état de l'environnement du troisième véhicule,
- dans lequel le troisième véhicule (F3) est conçu pour envoyer les données de capteurs du troisième véhicule audit au moins un autre serveur de domaine régional (BS2) lorsque le troisième véhicule (F3) est enregistré sur ledit au moins un autre serveur de domaine régional (BS2),
- dans lequel ledit au moins un autre serveur de domaine régional (BS2) est conçu pour évaluer les données de capteurs du troisième véhicule (F3) et pour générer les autres données informationnelles en fonction des données de capteurs du troisième véhicule (F3).

6. Système selon la revendication 5,
- dans lequel ledit au moins un autre serveur de domaine régional (BS2) est conçu pour envoyer les autres données informationnelles au serveur de domaine régional (BS1),
- dans lequel le serveur de domaine régional (BS1) est conçu pour envoyer les autres données informationnelles au premier véhicule (F1) lorsque l'itinéraire indiqué par les données d'itinéraires (PW1) prédites du premier véhicule (F1) se situe en partie dans le domaine régional (GB1) et en partie dans ledit au moins un autre domaine régional (GB2) et lorsque le premier véhicule (F1) est enregistré sur le serveur de domaine régional (BS1).

7. Système selon l'une des revendications précédentes,
- dans lequel l'enregistrement du premier véhicule (F1) sur le serveur de domaine régional (BS1) est annulé lorsque l'itinéraire indiqué par les données d'itinéraires (PW1) prédites du premier véhicule ne se situe pas dans le domaine régional (GB1),
- dans lequel le premier véhicule (F1) est enregistré sur ledit au moins un autre serveur de domaine régional (BS2) lorsque l'itinéraire indiqué par les données d'itinéraires (PW1) prédites du premier véhicule (F1) se situe dans ledit au moins un autre domaine régional (GB2).

8. Système selon l'une des revendications précédentes,
- dans lequel le serveur régional (GS) est conçu pour enregistrer les véhicules (F1, F2, F3) sur le serveur de domaine régional (BS1) ou sur ledit au moins un autre serveur de domaine régional (BS2) en fonction du fait que l'itinéraire indiqué par les données d'itinéraires (PW1, PW2, PW3) respectivement prédites se situe dans le domaine régional (GB1) ou dans ledit au moins un autre domaine régional (GB2).

9. Système selon l'une des revendications 1 à 8, dans lequel les données de capteurs et les données informationnelles sont envoyées par l'intermédiaire d'un réseau de téléphonie mobile.

10. Procédé de mise à disposition de données destinées à des véhicules pour la prise en charge d'une conduite hautement automatisée, comprenant :
- la mise à disposition d'un serveur de domaine régional (BS1) servant à fournir des données informationnelles à des véhicules (F1, F2) dans un domaine régional (GB1), dans lequel les données informationnelles contiennent des informations destinées à la commande des véhicules (F1, F2),
- la prédiction de données d'itinéraires (PW1, PW2) par des premier et deuxième véhicules (F1, F2), dans lequel les données d'itinéraires (PW1, PW2) respectives indiquent au moins un itinéraire que les premier et deuxième véhicules (F1, F2) vont parcourir avec une certaine probabilité en un certain temps après la prédiction des données d'itinéraires (PW1, PW2), dans lequel chaque véhicule (F1, F2) dispose de données d'itinéraires (PW1, PW2) prédites et les données d'itinéraires prédites sont envoyées au serveur de domaine régional (BS1) sur lequel le véhicule (F1, F2) correspondant est enregistré,
- la détermination de données de capteurs par des capteurs (S1, S2) des premier et deuxième véhicules (F1, F2), dans lequel les données de capteurs indiquent une position du véhicule respectif et/ou un état du véhicule respectif et/ou un état d'un lieu du véhicule respectif et/ou un état d'un conducteur respectif des premier et deuxième véhicules (F1, F2),
- l'enregistrement des premier et deuxième véhicules (F1, F2) sur le serveur de domaine régional (BS1) lorsque l'itinéraire respectivement indiqué par les données d'itinéraires (PW1, PW2) prédites des premier et deuxième véhicules (F1, F2) se situe dans le domaine régional (GB1),
- l'envoi des données de capteurs respectivement déterminées par les premier et deuxième véhicules (F1, F2) au serveur de domaine régional (GB1) lorsque les premier et deuxième véhicules (F1, F2) sont enregistrés sur le serveur de domaine régional (GB1), dans lequel les premier et deuxième véhicules (F1, F2) sont conçus pour envoyer les données de capteurs respectivement déterminées au serveur de domaine régional (BS1) dans le domaine de responsabilité duquel ils sont enregistrés,
- l'évaluation par le serveur de domaine régional (BS1) des données de capteurs reçues en provenance du premier véhicule (F1) et la génération des données informationnelles en fonction des données de capteurs reçues du premier véhicule (F1),
- l'envoi par le serveur de domaine régional (BS1) des données informationnelles générées au deuxième véhicule (F2) lorsque les données d'itinéraires (PW2) prédites du deuxième véhicule (F2) recoupent les données d'itinéraires (PW1) prédites du premier véhicule (F1) et lorsque le deuxième véhicule (F2) est enregistré sur le serveur de domaine régional (BS1), **caractérisé en ce que** le procédé comprend en outre :
- la mise à disposition d'un serveur régional (GS) destiné à diviser une région (G) en le domaine régional (GB1) et en au moins un autre domaine régional (GB2),
- l'envoi des données d'itinéraires (PW1, PW2, PW3) respectivement prédites des véhicules (F1, F2, F3) au serveur régional (GS),
- l'établissement par le serveur régional (GS) d'une taille respective du domaine régional (GB1) et dudit au moins un autre domaine régional (GB2) en fonction des données d'itinéraires (PW1, PW2, PW3) respectivement prédites des véhicules (F1, F2, F3).

11. Procédé selon la revendication 10, comprenant :
l'envoi des données informationnelles générées au deuxième véhicule (F2) par le serveur de domaine régional (BS1) lorsque le lieu en fonction de l'état duquel les données informationnelles ont été générées se situe sur ledit au moins un itinéraire indiqué par les données d'itinéraires prédites du deuxième véhicule (F2).

12. Procédé selon la revendication 10 ou 11, comprenant :
- la mise à disposition d'au moins un autre serveur de domaine régional (BS2) destiné à fournir d'autres données informationnelles à des véhicules (F3) dans ledit au moins un autre domaine régional (GB2),
- l'envoi par le serveur de domaine régional (BS1) des données informationnelles déterminées en fonction des données de capteurs du premier véhicule (F1) audit au moins un autre serveur de domaine régional (BS2) lorsque l'itinéraire indiqué par les données d'itinéraires (PW1) prédites du premier véhicule (F1) se situe en partie dans le domaine régional (GB1) et en partie dans ledit au moins un autre domaine régional (GB2) et lorsque le premier véhicule (F1) est enregistré sur le serveur de domaine régional (BS1),
- la prédiction de données d'itinéraires (PW3) par un troisième véhicule (F3), dans lequel les données d'itinéraires (PW3) prédites du troisième véhicule indiquent au moins un itinéraire qui sera parcouru par le troisième véhicule (F3) avec une certaine probabilité au cours dudit temps après la prédiction des données d'itinéraires (PW3),
- l'enregistrement du troisième véhicule (F3) sur ledit au moins un autre serveur de domaine régional (BS2) lorsque l'itinéraire indiqué par les données d'itinéraires (PW3) prédites du troisième véhicule (F3) se situe dans ledit au moins un autre domaine régional (GB2),
- l'envoi par ledit au moins un autre serveur de domaine régional (BS2)des données informationnelles reçues en provenance du serveur de domaine régional (BS1) au troisième véhicule (F3) lorsque le troisième véhicule (F3) est enregistré sur ledit au moins un autre serveur de domaine régional (BS2).

13. Procédé selon la revendication 12, comprenant :
- la mise à disposition du troisième véhicule (F3) de capteurs (S3) destinés à déterminer les données de capteurs, dans lequel les données de capteurs du troisième véhicule (F3) indiquent une position du troisième véhicule et un état du troisième véhicule et/ou un état de l'environnement du troisième véhicule,
- l'envoi par le troisième véhicule (F3) des données de capteurs du troisième véhicule audit au moins un autre serveur de domaine régional (BS2) lorsque le troisième véhicule (F3) est enregistré sur ledit au moins un autre serveur de domaine régional (BS2),
- l'évaluation par ledit au moins un autre serveur de domaine régional (BS2) des données de capteurs du troisième véhicule (F3) et la génération des autres données informationnelles en fonction des données de capteurs du troisième véhicule (F3),
- l'envoi par ledit au moins un autre serveur de domaine régional (BS2) des autres données informationnelles au serveur de domaine régional (BS1),
- l'envoi par le serveur de domaine régional (BS1) des autres données informationnelles au premier véhicule (F1) lorsque l'itinéraire indiqué par les données d'itinéraires (PW1) prédites du premier véhicule (F1) se situe en partie dans le domaine régional (GB1) et en partie dans ledit au moins un autre domaine régional (GB2) et lorsque le premier véhicule (F1) est enregistré sur le serveur de domaine régional (BS1).

14. Procédé selon l'une des revendications 10 à 13, comprenant :
- l'annulation de l'enregistrement du premier véhicule (F1) sur le serveur de domaine régional (BS1) lorsque l'itinéraire indiqué par les données d'itinéraires (PW1) prédites du premier véhicule ne se situe pas dans le domaine régional (GB1),
- l'enregistrement du premier véhicule (F1) sur ledit au moins un autre serveur de domaine régional (BS2) lorsque l'itinéraire indiqué par les données d'itinéraires (PW1) prédites du premier véhicule (F1) se situe dans ledit au moins un autre domaine régional (GB2).

15. Procédé selon l'une des revendications 10 à 14, comprenant :
- l'enregistrement par le serveur régional (GS) des véhicules (F1, F2, F3) sur le serveur de domaine régional (BS1) ou sur ledit au moins un autre serveur de domaine régional (BS2) en fonction du fait que l'itinéraire indiqué par les données d'itinéraires (PW1, PW2, PW3) respectivement prédites se situe dans le domaine régional (GB1) ou dans ledit au moins un autre domaine régional (GB2).
